# EUROPÄISCHE PATENTANMELDUNG

(11) **EP 3 450 056 A1**
(43) Veröffentlichungstag der Anmeldung: **06.03.2019**
(21) Anmeldenummer: 18184110.7
(22) Anmeldetag: 18.07.2018
(51) Int. Cl.: B22F 3/105, B22F 3/15, B22F 3/24, B22F 5/04, C22C 1/04, F01D 5/14, B33Y 80/00, B33Y 70/00, B33Y 10/00, B23K 26/342, B22F 7/06

(54) **VERFAHREN ZUR HERSTELLUNG EINES TITANALUMINID-BAUTEILS MIT ZÄHEM KERN UND ENTSPRECHEND HERGESTELLTES BAUTEIL**

(30) Priorität: 01.09.2017 DE 102017215321
(71) Anmelder: MTU Aero Engines AG, 80995 München (DE)
(72) Erfinder: Schloffer, Martin, 81247 München (DE); Smarsly, Wilfried, 81669 München (DE)

(57) **Zusammenfassung**

Die vorliegende Erfindung betrifft ein Verfahren zur Herstellung eines Bauteils einer Strömungsmaschine, insbesondere einer Schaufel, bei welchem
zunächst eine Hülle (6) mit einem innenliegenden Hohlraum (7) entsprechend der Außenkontur des Bauteils aus einem intermetallischen TiAl - Werkstoff hergestellt wird und anschließend eine Ti - Legierung in Pulverform in den Hohlraum eingefüllt wird und der Hohlraum mit dem eingefüllten Ti - Legierungspulver dicht verschlossen wird, wobei nachfolgend die dicht verschlossene Hülle (6) mit dem eingeschlossenen Ti - Legierungspulver durch heißisostatisches Pressen zu dem Bauteil der Strömungsmaschine bearbeitet wird. Alternativ betrifft die Erfindung ein Verfahren zur generativen Herstellung eines Bauteils mit einer Hülle aus einer TiAl - Legierung und einem Kern aus einer Ti - Legierung. Außerdem betrifft die Erfindung ein entsprechend hergestelltes Bauteil.

## Beschreibung

### GEBIET DER ERFINDUNG

Die vorliegende Erfindung betrifft ein Verfahren zur Herstellung eines Bauteils einer Strömungsmaschine insbesondere einer Schaufel einer Gasturbine oder eines Flugtriebwerks, sowie ein entsprechend hergestelltes Bauteil und insbesondere eine Schaufel einer Strömungsmaschine.

### STAND DER TECHNIK

Strömungsmaschinen, wie stationäre Gasturbinen oder Flugtriebwerke sind seit langem bekannt und im Einsatz. Allerdings besteht weiterhin der Wunsch und der Bedarf, den Wirkungsgrad und die Effizienz derartiger Maschinen zu erhöhen. Zu diesem Zweck wird versucht, bestimmte Bauteile der Strömungsmaschine, wie beispielsweise Laufschaufeln, aus Leichtbauwerkstoffen zu fertigen. Durch die Reduzierung des Gewichts der Laufschaufeln kann nicht nur das gesamte Gewicht der Strömungsmaschine reduziert werden, was insbesondere bei Flugtriebwerken interessant ist, sondern durch die Verringerung der zu bewegenden Massen kann der Wirkungsgrad positiv beeinflusst werden. Darüber hinaus wird durch eine Steigerung der Betriebstemperaturen ebenfalls versucht den Wirkungsgrad von Strömungsmaschinen zu verbessern.

Entsprechend ist es aus dem Stand der Technik bereits bekannt, intermetallische Werkstoffe, wie Titanaluminide, für die Herstellung von Laufschaufeln für Strömungsmaschinen zu verwenden, da diese sich durch eine hohe Hochtemperaturfestigkeit und ein niedriges spezifisches Gewicht auszeichnen, sodass der Einsatz dieses Werkstoffs hohe Effizienzsteigerungen verspricht.

Allerdings weist die Verwendung von Titanaluminid - Werkstoffen insbesondere bei Flugtriebwerken die Problematik auf, dass durch die intermetallischen Eigenschaften des Werkstoffs die Bruchzähigkeit gering ist und entsprechend hergestellte Bauteile anfällig gegenüber Schlagbelastungen sind. Bei Flugtriebwerken besteht somit die Problematik, dass bei Fremdkörpern, die in das Triebwerk gelangen, das Risiko besteht, dass Schaufeln, die aus Titanaluminid - Werkstoffen gefertigt sind, beim Auftreffen der Fremdkörper auf die Schaufeln beschädigt werden.

### OFFENBARUNG DER ERFINDUNG

### AUFGABE DER ERFINDUNG

Es ist deshalb Aufgabe der vorliegenden Erfindung eine Bauweise und ein Verfahren zur Herstellung von Bauteilen aus Titanaluminid - Werkstoffen für Strömungsmaschinen sowie entsprechende Bauteile bereitzustellen, die eine höhere Robustheit gegenüber Schlagbeanspruchung aufweisen. Gleichzeitig soll das entsprechende Herstellungsverfahren einfach durchführbar sein und die entsprechenden Bauteile einen gleichbleibenden Wirkungsgrad der Strömungsmaschine im Vergleich zu bekannten TiAl - Bauteilen ermöglichen.

### TECHNISCHE LÖSUNG

Diese Aufgabe wird gelöst durch ein Verfahren mit den Merkmalen des Anspruchs 1 sowie ein Bauteil mit den Merkmalen des Anspruchs 12. Vorteilhafte Ausgestaltungen sind Gegenstand der abhängigen Ansprüche.

Die Erfindung schlägt vor, ein entsprechendes Bauteil einer Strömungsmaschine, welches zumindest teilweise aus Titanaluminden gefertigt ist, so zu gestalten, dass das Bauteil eine Hülle aus einer intermetallischen TiAl - Legierung aufweist, während der Kern, der von der Hülle umgeben ist, durch eine Titanlegierung mit einer höheren Zähigkeit als die der intermetallischen TiAl - Legierung gebildet ist. Dadurch können die verschiedenen Eigenschaften der beiden unterschiedlichen Werkstoffe, nämlich der Titanaluminide und der Titanlegierungen, miteinander kombiniert werden. Der Titanaluminid - Werkstoff der Bauteilhülle verleiht dem Bauteil bei niedrigem spezifischen Gewicht eine hohe Festigkeit und insbesondere Hochtemperaturfestigkeit sowie eine ausreichende Hochtemperaturbeständigkeit, insbesondere Oxidationsbeständigkeit, während der Kern aus einer Titanlegierung dem Bauteil die erforderliche Zähigkeit zur Verfügung stellt. Kommt es nämlich zu einer Schlagbeanspruchung des Bauteils, beispielsweise durch Einwirken eines Fremdkörpers, der in die Strömungsmaschine gelangt ist, oder durch einen Körper, der aus einer vorderen Stufe der Strömungsmaschine stammt, so wird bei einem Versagen der intermetallischen Titanaluminid - Hülle der Kern aus einer Titanlegierung die Strukturstabilität aufrechterhalten können, sodass ein schlagartiges Totalversagen vermieden werden kann. Die geringfügige Gewichtszunahme durch die Titanlegierung, die ein höheres spezifisches Gewicht als die intermetallischen Titanaluminid - Werkstoffe aufweist, kann zur Erzielung einer höheren Betriebssicherheit akzeptiert werden.

Unter intermetallischen Titanaluminid - Werkstoffen oder TiAl - Legierungen werden im Rahmen der vorliegenden Erfindung Werkstoffe verstanden, die als Hauptbestandteile Titan und Aluminium aufweisen und intermetallische Phasen, wie, Ti₃Al, γ - TiAl und dergleichen im Gefüge aufweisen. Neben den Hauptbestandteilen Titan und Aluminium, bei denen sowohl das Titan als auch das Aluminium mit dem größten Anteil in dem entsprechenden Werkstoff vorliegen kann, können in den Titanaluminid - Werkstoffen verschiedene Legierungsbestandteile, wie beispielsweise Niob, Molybdän etc. vorhanden sein. Beispiele für mögliche Titanaluminid - Werkstoffe sind TNM™ mit 43,5 at.% Aluminium(Al), 4 at.% Niob(Nb), 1 at.% Molybdän(Mo) und 0,1 at.% Bor(B) sowie Rest Titan(Ti) und unvermeidbaren Verunreinigungen oder Ge 4822 mit 48 at.% Aluminium(Al), 2 at.% Niob(Nb), 2 at.% Chrom(Cr) sowie Rest Titan(Ti) und unvermeidbaren Verunreinigungen, wobei die angegebenen Zusammensetzungen die üblichen Nominalzusammensetzungen betreffen, von denen innerhalb der Spezifikation abgewichen werden kann.

Unter Titanlegierungen werden Legierungen verstanden, deren Hauptbestandteil Titan ist. Insbesondere können hochwarmfeste Titanlegierungen, wie beispielsweise Ti6242 mit 6 at.-% Aluminium(Al), 2 at.-% Zinn(Sn), 4 at.-% Zirkon(Zr), 2 at.-% Molybdän(Mo) und Rest Titan(Ti) sowie unvermeidbaren Verunreinigungen, Timetal 1100 mit 6 at.-% Aluminium(Al), 2,7 at.-% Zinn(Sn), 4 at.-% Zirkon(Zr), 0,4 at.-% Molybdän(Mo), 0,45 at.-% Silizium(Si), bis zu 0,03 at.-% Eisen(Fe) und Rest Titan(Ti) sowie unvermeidbaren Verunreinigungen, Ti64 mit 6 at.-% Aluminium(Al), 4 at.-% Vanadium(V) und Rest Titan(Ti) sowie unvermeidbaren Verunreinigungen oder IMI834 mit 5,5 at.-% Aluminium(Al), 4 at.-% Zinn(Sn), 3,5 at.-% Zirkon(Zr), 0,7 at.-%, Niob(Nb), 0,5 at.-% Molybdän(Mo), 0,35 at.-% Silizium(Si), und Rest Titan(Ti) sowie unvermeidbaren Verunreinigungen verwendet werden, wobei die angegebenen Zusammensetzungen die üblichen Nominalzusammensetzungen betreffen, von denen innerhalb der Spezifikation abgewichen werden kann.

Ein entsprechendes Bauteil einer Strömungsmaschine, wie beispielsweise eine Schaufel, kann erfindungsgemäß dadurch hergestellt werden, dass zunächst eine Hülle aus einem intermetallischen Titanaluminid - Werkstoff hergestellt wird, wobei die Hülle eine Außenkontur aufweist, die bereits weitgehend der Außenkontur des herzustellenden Bauteils entsprechen kann. Wie unten noch dargestellt wird, können jedoch die Dimensionen der zunächst herzustellenden Hülle etwas größer bemessen sein, als die Dimensionen des fertiggestellten Bauteils und / oder das Bauteil kann an der Außenkontur im gewissen Umfang nach bearbeitet werden.

Die Hülle aus einem intermetallischen Titanaluminid - Werkstoff weist einen innenliegenden Hohlraum auf, in welchen nach der Herstellung der Hülle eine Titanlegierung in Pulverform (Titanlegierungspulver) eingefüllt werden kann, um damit den Kern des Bauteils auszubilden. Entsprechend weist der Hohlraum der Hülle eine Form auf, die dem Kern des Bauteils entspricht, der nach Fertigstellung des Bauteils von der Hülle umgeben ist und aus einer Titanlegierung gebildet ist.

Nach dem Einfüllen des Titanlegierungspulvers in den Hohlraum der Hülle wird der Hohlraum mit dem eingefüllten Titanlegierungspulver dicht verschlossen, wobei dies unter Vakuumbedingungen erfolgen kann, sodass in dem Hohlraum noch vorhandenes Gas evakuiert werden kann, bevor der Hohlraum verschlossen wird.

Die dicht verschlossene Hülle mit dem eingeschlossenen Titanlegierungspulver wird durch heißisostatisches Pressen zu dem gewünschten Bauteil der Strömungsmaschine verarbeitet. Durch das heißisostatische Pressen kann das in dem Hohlraum eingeschlossene Titanlegierungspulver konsolidiert und zu einem festen Körper verarbeitet werden.

Um zu vermeiden, dass beim heißisostatischen Pressen ein Grobkornwachstum der Titanlegierungen erfolgen kann, kann das Titanlegierungspulver einen Anteil an höher schmelzenden Fremdpartikeln, wie Oxide, Karbide, Silizide oder auch intermetallische Partikel, wie insbesondere intermetallische TiAl - Partikel aufweisen, die während des heißisostatischen Pressens nicht aufschmelzen und damit die Korngrenzen des Titanlegierungspulvers der Titanlegierung festpinnen.

Der Anteil an Fremdpartikeln oder TiAl - Partikeln im Titanlegierungspulver kann im Bereich 2 bis 20 Vol.%, insbesondere im Bereich von 8 bis 15 Vol.% liegen.

Das Titanlegierungspulver kann weiterhin so ausgebildet sein, dass der Anteil an feinen Pulverpartikeln, die Korngrößen kleiner 15 µm aufweisen, kleiner oder gleich 5 Vol.%, insbesondere kleiner oder gleich 1 Vol.% ist.

Die Hülle kann durch generative oder additive Verfahren hergestellt werden, bei welchen die Hülle lagenweise, beispielsweise aus Pulvermaterial, aufgebaut wird. Insbesondere kann die Hülle durch Laserstrahlschmelzen, insbesondere selektives Laserstrahlschmelzen, oder Elektronenstrahlschmelzen hergestellt werden. Die generativen Verfahren besitzen den Vorteil, dass nahezu beliebige Formen der Hülle mit beliebigen Oberflächenstrukturen und Hinterschneidungen hergestellt werden können.

Entsprechend kann die Grenzfläche zwischen Kern und Hülle eine dreidimensionale Flächenstruktur aufweisen, sodass Kern und Hülle durch die Form der Grenzfläche miteinander verzahnt sind. Darüber hinaus kann eine dreidimensionale Innenkontur der Hülle, bei der die Grenzfläche zwischen Kern und Hülle nicht in einer Ebene oder glatten Fläche liegt, sondern Richtungswechsel mit Vertiefungen und Vorsprüngen aufweist, eine zusätzliche Verstärkung bzw. Erhöhung der Festigkeit, insbesondere gegenüber Biegebelastungen, bewirken.

Die Hülle kann auch so ausgebildet sein, dass beispielsweise bei einer Schaufel für eine Strömungsmaschine der Fußbereich der Schaufel komplett als Bestandteil der Hülle ausgebildet wird, sodass lediglich im Schaufelblattbereich ein Kern aus einer Ti - Legierung vorliegt.

Das Verschließen des Hohlraums nach dem Einfüllen des Titanlegierungspulvers kann ähnlich wie die generative Herstellung der Hülle ebenfalls mit einem hochenergetischen Strahl erfolgen, mit dem die obersten Lagen des eingefüllten Titanlegierungspulvers aufgeschmolzen werden können, sodass nach erneutem Erstarren der Schmelze die entsprechende Öffnung des Hohlraums verschlossen ist.

Das heißisostatisch gepresste Bauteil kann nach dem heißisostatischen Pressen einer Wärmebehandlung unterzogen werden, um das Gefüge des Kerns und / oder der Hülle in geeigneter Weise einzustellen.

Wie bereits oben erwähnt, können einzelne oder mehrere oder gar alle Schritte des Verfahrens unter Vakuumbedingungen durchgeführt werden. Insbesondere das generative Herstellen der Hülle sowie das Einfüllen des Titanlegierungspulvers in den Hohlraum der Hülle als auch das Verschließen des Hohlraums nach dem Einfüllen des Titanlegierungspulvers mit einem hochenergetischen Strahl können unter Hochvakuum durchgeführt werden, um Umwelteinflüsse auf die Gefügeausbildung des herzustellenden Bauteils zu vermeiden.

Nach dem heißisostatischen Pressen kann das Bauteil einer Endbearbeitung zur exakten Dimensionierung des hergestellten Bauteils und / oder zur Einstellung einer gewünschten Oberflächengüte unterzogen werden. Beispielsweise kann die Oberfläche mechanisch oder elektrochemische bearbeitet werden.

Alternativ zur Bildung einer Hülle für das Ti - Legierungspulver und heißisostatischem Pressen des Bauteils kann sowohl die Hülle aus einer TiAl - Legierung als auch der Kern aus einer Ti - Legierung durch generative Verfahren, wie Laserstrahlschmelzen oder Elektronenstrahlschmelzen, insbesondere selektives Laserstrahlschmelzen oder Elektronenstrahlschmelzen, ausgebildet werden.

### KURZBESCHREIBUNG DER FIGUREN

Die beigefügten Zeichnungen zeigen in rein schematischer Weise in
- Figur 1: einen Längsschnitt durch ein Schaufelhalbzeug gemäß der Erfindung,
- Figur 2: eine Schnittansicht entlang der Schnittlinie A - A aus Fig. 1,
- Figur 3: eine Schnittansicht entlang der Schnittlinie B - B aus Fig. 1,
- Figur 4: eine Schnittansicht entlang der Schnittlinie C - C aus Fig. 1, und in
- Figur 5: einen Längsschnitt durch eine weitere Ausführungsform eines Schaufelhalbzeugs gemäß der Erfindung.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele ersichtlich. Allerdings ist die Erfindung nicht auf diese Ausführungsbeispiele beschränkt.

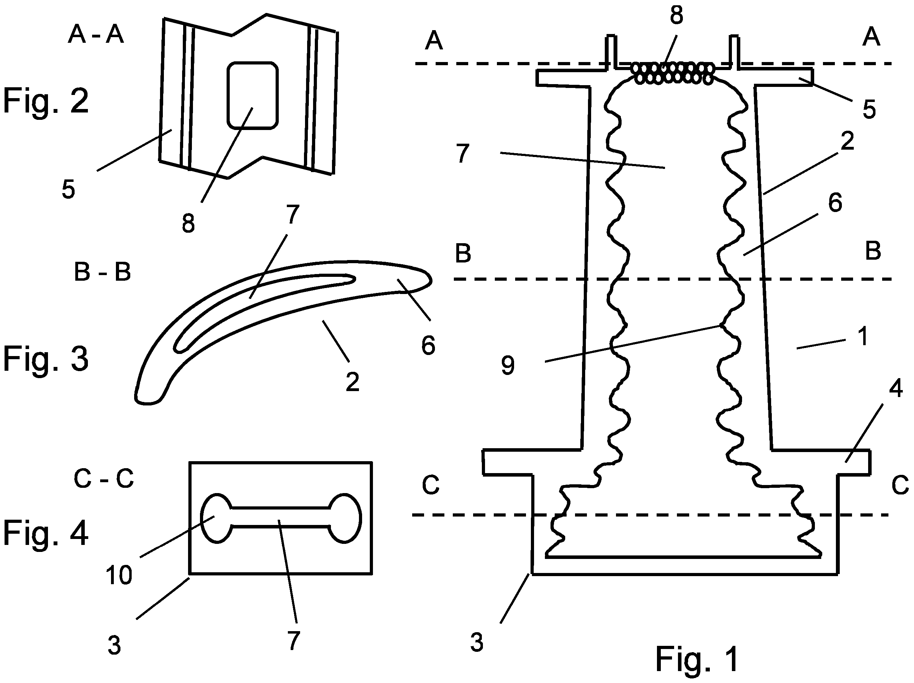

Die Figur 1 zeigt einen Längsschnitt durch ein Halbzeug einer Schaufel einer Strömungsmaschine, wie beispielsweise einer Gasturbine oder eines Flugtriebwerks, wie es bei der Herstellung einer entsprechenden Schaufel gemäß der vorliegenden Erfindung Verwendung findet.

Die Schaufel 1 umfasst ein Schaufelblatt 2 sowie einen Schaufelfuß 3. Zwischen Schaufelfuß 3 und Schaufelblatt 2 ist ein inneres Deckband 4 angeordnet, während an der Schaufelspitze ein äußeres Deckband 5 vorgesehen ist. Die Schaufel 1 wird erfindungsgemäß mit einer äußeren Hülle 6 ausgebildet, die einen inneren Kern umgibt. In dem in Figur 1 gezeigten Halbzeug ist ein Hohlraum 7 ausgebildet, der dem späteren Kern der Schaufel entspricht.

In der Figur 1 ist die Hülle 6 der Schaufel 1 zu sehen, die durch ein generatives Verfahren aus einem TiAl - Pulver hergestellt worden ist. Als generatives Verfahren können Laserstrahlschmelzen oder Elektronenstrahlschmelzen eingesetzt werden. Innerhalb der Hülle 6 ist der Hohlraum 7 zu sehen, der auch als Pulverkanal 7 bezeichnet werden kann, da in dem Hohlraum 7 das Pulver für den Kern der Schaufel 1 angeordnet wird. Entsprechend ist bei einer fertig hergestellten Schaufel 1 der Bereich des Hohlraums 7 durch den Kern der Schaufel 1 gefüllt. Zum Einfüllen des Pulvers für den Kern ist an der Oberseite des Hohlraums 7 bzw. des Pulverkanals 7 eine Öffnung 8 vorgesehen, in die das Pulver zur Ausbildung des Kerns der Schaufel 1 eingefüllt werden kann. In der Darstellung der Figur 1 ist die Öffnung 8 schematisch durch eine Vielzahl von Schweißlagen verschlossen, die durch das Aufschmelzen der obersten Schichten des Pulvers im Pulverkanal 7 und anschließendes Erstarren der Schmelze entstanden sind, um die Öffnung 8 luftdicht abzuschließen. Das Pulver im Hohlraum bzw. Pulverkanal ist der Einfachheit halber nicht dargestellt.

Wie sich ebenfalls aus der Figur 1 ergibt, weist der Hohlraum 7 eine dreidimensionale Innenkontur 9 mit einer Vielzahl von Vertiefungen und Vorsprüngen auf, sodass der aus dem in den Pulverkanal 7 eingeführten Pulver entstandene Kern durch die Innenkontur 9 mit der Hülle 6 verzahnt ist. Dies bewirkt nicht nur eine gute Verbindung zwischen Kern und Hülle 6, sondern durch die Innenkontur 9 kann auch eine Erhöhung der Festigkeit der Hülle 6 erreicht werden.

Die Figuren 2 bis 4 zeigen verschiedene Schnittansichten entlang der Schnittlinien A - A, B - B und C - C. In den Schnittansichten der Figuren 2 bis 4 ist ebenfalls zu erkennen, wie der Pulverkanal 7 bzw. der spätere Kern der Schaufel 1 ausgebildet ist.

In der Figur 2, die eine Schnittansicht im Bereich des oberen Deckbands 5 zeigt, ist die Öffnung 8 zu sehen, über die das Pulver für den Kern der Schaufel 1 in den Pulverkanal 7 eingefüllt werden kann. Diese Öffnung 8 wird nach dem Befüllen des Pulverkanals 7 durch Verschmelzen der obersten Pulverschichten verschlossen.

Die Figur 3 zeigt einen Querschnitt im Bereich des Schaufelblatts 2, wobei deutlich die umgebende Hülle 6 aus einem Titanaluminid - Werkstoff zu sehen ist, die den Kern 7 aus einer hochwarmfesten Titanlegierung umgibt.

In der Figur 4 ist ein Querschnitt durch den Fuß 3 der Schaufel 1 gezeigt, wobei hier der Pulverkanal 7 und somit der spätere Kern der Schaufel 1 an den Enden jeweils eine Pulverkanalerweiterung 10 bzw. Erweiterung des Kerns aufweist, sodass ein höherer Anteil der zähen Titanlegierung an den Stirnseiten des Fußes vorliegt, sodass bei einer Schlageinwirkung in diesen Bereichen die Zähigkeit des Schaufelfußes 3 erhöht ist.

Insgesamt ergibt sich aus den Figuren 1 bis 4, dass der Hohlraum bzw. Pulverkanal 7 und entsprechend der dadurch gebildete Kern, der von der Titanaluminid - Hülle 6 umgeben ist, in unterschiedlicher Weise ausgebildet sein kann, um die gewünschte und geeignete Festigkeit der Titanaluminid - Hülle 6 sowie die erforderliche Zähigkeit des Kerns zu erreichen.

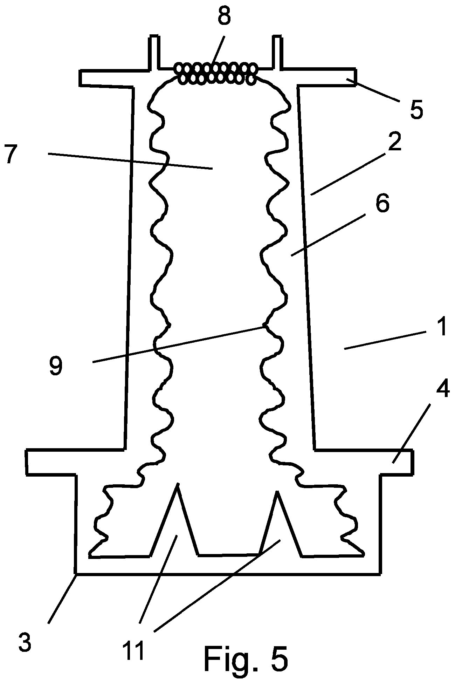

Die Figur 5 zeigt ein weiteres Beispiel eines Schaufelhalbzeugs 1, bei dem durch die Formgestaltung der Hülle 6 bzw. des Hohlraums 7 Einfluss auf das Eigenschaftsprofil der Schaufel 1 hinsichtlich der Festigkeit und Zähigkeit genommen werden kann, indem beispielsweise die Titanalminid - Hülle 6 mit Verstärkungen 11 ausgebildet wird.

Das erfindungsgemäße Verfahren kann nunmehr so durchgeführt werden, dass zunächst die Hülle 6 aus einem Titanalminid - Werkstoff gebildet wird, wobei vorzugsweise ein generatives bzw. additives Verfahren eingesetzt werden kann, bei welchem lagenweise Pulvermaterial aufgeschmolzen wird, sodass nach dem Erstarren der jeweiligen Schmelze ein festes Halbzeug entsprechend des lageweisen erstarrten Materials entsteht. Durch generative Verfahren können insbesondere beliebige Formen realisiert werden, sodass vorteilhaft die Innenkontur 9 der Hülle 6 in einer beliebigen Art und Weise gestaltet werden kann.

Nach dem Herstellen der Hülle 6 wird in den Hohlraum 7 über die Öffnung 8 ein Pulverwerkstoff eingefüllt und anschließend wird die Öffnung 8 vorzugsweise durch Aufschmelzen der obersten Pulverschichten des eingefüllten Pulvers dicht verschlossen. Das Verschließen der Öffnung 8 kann beispielsweise ähnlich dem generativen Herstellen der Hülle 6 durch Aufschmelzen mit einem hochenergetischen Strahl, beispielsweise einem Elektronenstrahl oder einem Laserstrahl, erfolgen.

Der eingefüllte Pulverstoff umfasst bei der vorliegenden Erfindung eine Titanlegierung, die eine höhere Zähigkeit bzw. einen geringeren E - Modul aufweist als der Titanalminid - Werkstoff der Hülle 6. Beispielsweise kann der E - Modul der Hülle im Bereich von 160 GPa liegen, während der E - Modul der Titanlegierung im Bereich von 120 GPa liegen kann.

Darüber hinaus kann in dem Pulvermaterial, welches in den Hohlraum 7 zur Ausbildung des Kerns der Schaufel 1 eingefüllt wird, ein gewisser Anteil an Titanalminid - Pulver vorliegen, welches bei der anschließenden Wärmebehandlung, bei welcher die Titanlegierung im β - Phasengebiet vorliegt, das Kornwachstum verhindert und die Korngrenzen der Ti - Legierung festpinnt.

Nach dem Einfüllen des Pulvermaterials in den Hohlraum 7 und Verschließen des Hohlraums 7 durch Verschweißen des Pulvermaterials an der Öffnung 8 wird das so erzeugte Halbzeug hei-βisostatisch gepresst und einer geeigneten Wärmebehandlung unterzogen. Dadurch kann sowohl das Gefüge des Titanalminid - Werkstoffs der Hülle 6 als auch das Gefüge der Titanlegierung des Kerns der Schaufel 1 in der gewünschten Weise eingestellt werden. Die Schrumpfung des Halbzeugs beim heißisostatischen Pressen kann vorab durch eine größere Dimensionierung der Hülle 6 berücksichtigt werden.

Nach dem heißisostatischen Pressen und der Wärmebehandlung kann das so erzeugte Bauteil bzw. die Schaufel 1 endbearbeitet werden, indem beispielsweise die Oberfläche durch eine mechanisch und / oder elektrochemische Bearbeitung eine entsprechende Oberflächengüte erhält bzw. der Verschluss der Öffnung 8 mechanisch oder elektrochemische nachbearbeitet wird.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Schaufel
- 2: Schaufelblatt
- 3: Schaufelfuß
- 4: inneres Deckband
- 5: äußeres Deckband
- 6: Hülle
- 7: Pulverkanal bzw. Kern
- 8: Öffnung bzw. Verschluss
- 9: Innenkontur
- 10: Pulverkanal - bzw. Kernerweiterungen
- 11: Hüllenverstärkungen

## Patentansprüche

1. Verfahren zur Herstellung eines Bauteils einer Strömungsmaschine, insbesondere einer Schaufel, bei welchem
zunächst eine Hülle (6) mit einem innenliegenden Hohlraum (7) entsprechend der Au-βenkontur des Bauteils aus einem intermetallischen TiAl - Werkstoff hergestellt wird und
anschließend eine Ti - Legierung in Pulverform in den Hohlraum eingefüllt wird und der Hohlraum mit dem eingefüllten Ti - Legierungspulver dicht verschlossen wird, wobei
nachfolgend die dicht verschlossene Hülle (6) mit dem eingeschlossenen Ti - Legierungspulver durch heißisostatisches Pressen zu dem Bauteil der Strömungsmaschine bearbeitet wird.

2. Verfahren zur Herstellung eines Bauteils einer Strömungsmaschine, insbesondere einer Schaufel, bei welchem durch ein generatives Herstellverfahren lagenweise eine Hülle (6) mit einer Außenkontur des Bauteils aus einem intermetallischen TiAl - Werkstoff und ein von der Hülle (6) umgebener Kern aus einer Ti - Legierung in Pulverform hergestellt werden.

3. Verfahren nach Anspruch 1 oder 2,
**dadurch gekennzeichnet, dass**
das Ti - Legierungspulver einen Anteil an höher schmelzenden Fremdpartikeln, insbesondere an TiAl - Partikeln beinhaltet.

4. Verfahren nach Anspruch 3,
**dadurch gekennzeichnet, dass**
der Anteil der Fremdpartikel oder TiAl - Partikel im Ti - Legierungspulver im Bereich von 2 bis 20 Vol.%, insbesondere im Bereich von 8 bis 15 Vol.% liegt.

5. Verfahren nach einem der vorhergehenden Ansprüche,
**dadurch gekennzeichnet, dass**
der Anteil an Feinpulverpartikeln mit Korngrößen kleiner 15 µm im Ti - Legierungspulver kleiner oder gleich 5 Vol.%, insbesondere kleiner oder gleich 1 Vol.% ist.

6. Verfahren nach einem der Ansprüche 1 oder 3 bis 5,
**dadurch gekennzeichnet, dass**
die Hülle (6) durch generative Verfahren hergestellt wird, bei welchen die Hülle (6) lagenweise aufgebaut wird.

7. Verfahren nach einem der Ansprüche 2 bis 6,
**dadurch gekennzeichnet, dass**
das generative Verfahren Laserstrahlschmelzen, insbesondere selektives Laserstrahlschmelzen, oder Elektronenstrahlschmelzen ist.

8. Verfahren nach einem der Ansprüche 1 oder 3 bis 7,
**dadurch gekennzeichnet, dass**
der Hohlraum (7) mit dem eingefüllten Ti - Legierungspulver durch Aufschmelzen des eingefüllten Ti - Legierungspulver, insbesondere durch Elektronenstrahl - oder Laserstrahlschmelzen dicht verschlossen wird.

9. Verfahren nach einem der vorhergehenden Ansprüche,
**dadurch gekennzeichnet, dass**
das heißisostatisch gepresste Bauteil oder das generativ hergestellte Bauteil einer Wärmebehandlung unterzogen wird.

10. Verfahren nach einem der vorhergehenden Ansprüche,
**dadurch gekennzeichnet, dass**
einzelne oder mehrere oder alle Schritte des Verfahrens unter Vakuumbedingungen durchgeführt werden.

11. Verfahren nach einem der vorhergehenden Ansprüche,
**dadurch gekennzeichnet, dass**
das heißisostatisch gepresste Bauteil oder generativ hergestellte Bauteil einer Endbearbeitung zur exakten Dimensionierung und / oder Oberflächeneinstellung unterzogen wird.

12. Bauteil einer Strömungsmaschine, insbesondere Schaufel (1), welches insbesondere mit einem Verfahren nach einem der vorhergehenden Ansprüche hergestellt worden ist, wobei das Bauteil eine Hülle (6) aus einer intermetallischen TiAl - Legierung aufweist, die einen Kern umgibt, der aus einer Ti - Legierung mit einer höheren Zähigkeit als die der intermetallischen TiAl - Legierung der Hülle gebildet ist.

13. Bauteil nach Anspruch 12,
**dadurch gekennzeichnet, dass**
der Kern ein Gefüge aufweist, bei dem zwischen den Kristallkörnern der Ti - Legierung intermetallische TiAl - Körner eingelagert sind.

14. Bauteil nach Anspruch 12 oder 13,
**dadurch gekennzeichnet, dass**
die Grenzfläche zwischen Kern und Hülle eine dreidimensionale Flächenstruktur (9) aufweist.

15. Bauteil nach einem der Ansprüche 12 bis 14,
**dadurch gekennzeichnet, dass**
das Bauteil eine Schaufel ist, bei der lediglich der Blattbereich einen von einer TiAl - Hülle umgebenen Kern aus einer Ti - Legierung aufweist, während der Fußbereich der Schaufel wie die Hülle vollständig aus einer TiAl - Legierung aufgebaut ist.
